# EUROPEAN PATENT SPECIFICATION

(11) **EP 1 351 416 B1**
(45) Date of publication and mention of the grant of the patent: **13.12.2006**
(21) Application number: 03006286.3
(22) Date of filing: 21.03.2003
(51) Int. Cl.: H04B 10/17, H04B 10/213, H04B 10/00, H04J 14/02

(54) **System and method for amplifying signals in an optical network**
System und Verfahren zur Verstärkung von Signalen in einem optischen Netzwerk
Système et méthode d'amplification des signaux dans un réseau optique

(30) Priority: 27.03.2002 US 109215
(43) Date of publication of application: 08.10.2003
(73) Proprietor: FUJITSU LIMITED, Kawasaki-shi, Kanagawa 211-8588 (JP)
(72) Inventor: Kinoshita, Susumu, Plano, Texas 75024 (US)
(74) Representative: HOFFMANN EITLE

(56) References cited:
- EP-A- 1 017 192
- EP-A- 1 039 670
- EP-A- 1 182 809
- WO-A-02/17520
- WO-A-97/09803
- WO-A-98/34363
- US-A- 5 854 698
- US-A- 6 122 095

## Description

### TECHNICAL FIELD OF THE INVENTION

The present invention relates generally to optical transport systems, and more particularly to a system and method for amplifying signals in an optical network.

### BACKGROUND OF THE INVENTION

Telecommunications systems, cable television systems and data communication networks use optical networks to rapidly convey large amounts of information between remote points. In an optical network, information is conveyed in the form of optical signals through optical fibers. Optical fibers comprise thin strands of glass capable of transmitting the signals over long distances with very low loss.

Optical networks often employ wavelength division multiplexing (WDM) or dense wavelength division multiplexing (DWDM) to increase transmission capacity. In WDM and DWDM networks, a number of optical channels are carried in each fiber at disparate wavelengths. Network capacity is based on the number of wavelengths, or channels, in each fiber and the bandwidth, or size of the channels. In WDM and other optical networks, erbium-doped fiber amplifiers are typically deployed to amplify the optical signal input and output at each node.

Prior art systems are known from US 5 854 698 and EP 1 039 670.

### SUMMARY OF THE INVENTION

The present invention provides a system and method for amplifying signals in an optical network. In one embodiment, Raman amplifiers use a shared pump source to cost-effectively amplify signals in the network.

In accordance with one embodiment of the present invention, an optical network comprises a plurality of nodes connected by an optical fiber. The nodes each comprise a pump combiner coupled to the optical fiber and operable to insert electromagnetic radiation which is a pumped light into the fiber to provide Raman amplification of a signal in a connected section of the optical fiber. A pump source remote from the nodes and coupled to the pump combiners is operable to provide pump energy through each of the pump combiners for Raman amplification

Technical advantages of the present invention include providing an improved method and system for amplifying optical signals in an optical network. In a particular embodiment, a number of nodes in a ring or on one or more spans of an optical network include Raman amplifiers powered by a remotely and/or centrally located pump. As a result, a single large pump may be used for a number of amplifiers and Raman amplification may be provided on a cost-efficient basis in terms of price per watt.

Another technical advantage of the present invention includes providing a stable, scalable, and cost effective dense wavelength-division multiplexing (DWDM) network. In a particular embodiment, amplification may be upgraded along with the addition of traffic channels by adding pump sources suitable for the wavelength of the new channels at the centrally located Raman pump. Thus, the amplification system for a network need only be upgraded as traffic is added to the network.

It will be understood that the various embodiments of the present invention may include some, all, or none of the enumerated technical advantages. In addition, other technical advantages of the present invention may be readily apparent to one skilled in the art from the following figures, description and claims.

### BRIEF DESCRIPTION OF THE DRAWINGS

For a more complete understanding of the present invention and its advantages, reference is now made to the following description taken in conjunction with the accompanying drawings, wherein like numerals represent like parts, in which:
FIGURE 1 is a block diagram illustrating an optical network in accordance with one embodiment of the present invention;
FIGURE 2 is a block diagram illustrating details of the node of FIGURE 1 in accordance with one embodiment of the present invention;
FIGURE 3 is a block diagram illustrating details of the external pump of FIGURE 1 in accordance with one embodiment of the present invention;
FIGURE 4 is a flow diagram illustrating a method of amplifying signals in an optical network in accordance with one embodiment of the present invention;
FIGURE 5 is a block diagram illustrating an optical network in accordance with another embodiment of the present invention;
FIGURE 6 is a block diagram illustrating details of the node of the optical network of FIGURE 5 in accordance with one embodiment of the present invention;
FIGURE 7A is a block diagram illustrating a variable optical attenuator unit of the node of FIGURE 6 in accordance with one embodiment of the present invention;
FIGURE 7B is a block diagram illustrating a distributing element of the node of FIGURE 6 in accordance with another embodiment of the present invention;
FIGURE 7C is a block diagram illustrating a combining element of the node in FIGURE 6 in accordance with another embodiment of the present invention;
FIGURE 7D is a block diagram illustrating details of an optical coupler of the node of FIGURE 6 in accordance with one embodiment of the present invention;
FIGURE 8 is a block diagram illustrating the open ring configuration and light path flow of the optical network of FIGURE 5 in accordance with one embodiment of the present invention;
FIGURE 9 is a block diagram illustrating the optical supervisory channel (OSC) flow in the optical network of FIGURE 5 in accordance with one embodiment of the present invention;
FIGURE 10 is a block diagram illustrating protection switching and light path protection in the optical network of FIGURE 5 in accordance with one embodiment of the present invention;
FIGURE 11 is a flow diagram illustrating a method for protection switching for the optical network of FIGURE 5 in accordance with one embodiment of the present invention;
FIGURE 12 is a block diagram illustrating OSC protection in the optical network of FIGURE 5 in response to a line cut in accordance with one embodiment of the present invention;
FIGURE 13 is a flow diagram illustrating a method for OSC protection switching in the optical network of FIGURE 5 in accordance with one embodiment of the present invention;
FIGURE 14 is a block diagram illustrating OSC protection in the optical network of FIGURE 5 in response to an OSC equipment failure in accordance with one embodiment of the present invention;
FIGURE 15 is a flow diagram illustrating a method for inserting a node into the optical network of FIGURE 4 in accordance with one embodiment of the present invention;
FIGURE 16 is a flow diagram illustrating a method for provisioning pump sources for a Raman amplified open ring optical network in accordance with one embodiment of the present invention; and
FIGURE 17 is a flow diagram illustrating a method of selectively terminating a supply of electromagnetic radiation to a node in response to a ring switch failure.

### DETAILED DESCRIPTION OF THE INVENTION

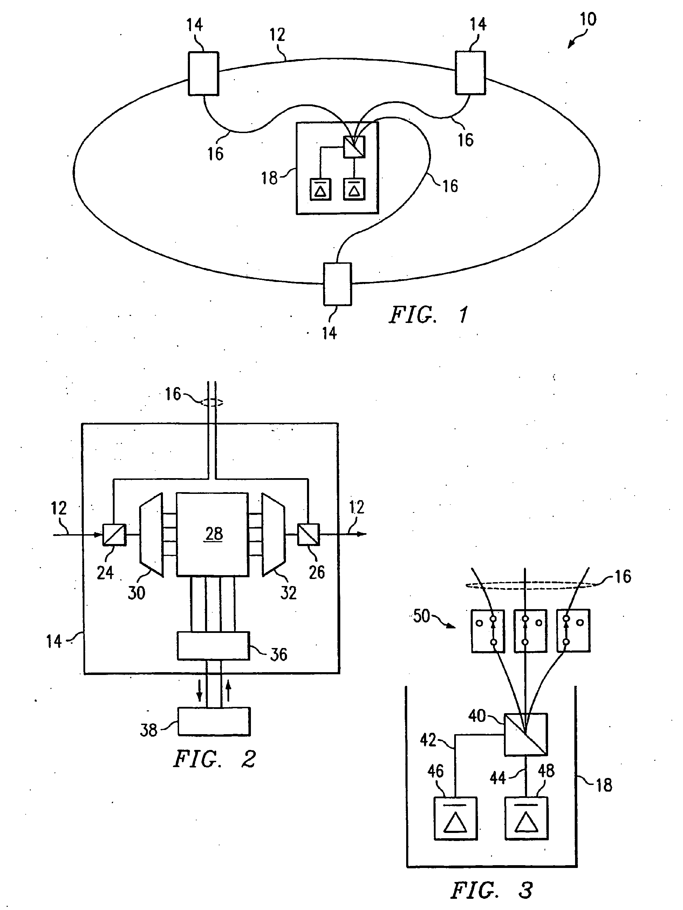

FIGURE 1 is a block diagram illustrating a photonic network 10 in accordance with one embodiment of the present invention. In this embodiment, the network 10 is an optical network in which a number of optical channels are carried over a common path at disparate wavelengths. The network 10 may be a wavelength division multiplexing (WDM), dense wavelength division multiplexing (DWDM), or other suitable multichannel network. The network 10 may be used in a short haul metropolitan network, a long haul inner city network, or any other suitable network or combination of networks.

Referring to FIGURE 1, the network 10 includes a fiber optical ring 12 and a plurality of nodes 14. Network 10 further comprises a distributed amplification system including a pump 18 and optical fiber leads 16 connecting the pump 18 to the nodes 14. The pump 18 is described in further detail in reference to FIGURE 3; other suitable means for generating an amplifier signal may be used. Optical information signals are transmitted on the ring 12 and have at least one characteristic modulated to encode audio, video, textual, real-time, non real-time, and/or other suitable data. Modulation may be based on phase shift keying (PSK), intensity modulation (IM), and other suitable methodologies.

The nodes 14 are operable to add and drop or otherwise route traffic to and from the ring 12. At each node, traffic from local clients is added to the ring 12 while traffic destined for local traffic is dropped. Further details regarding the nodes 14 are discussed in reference to FIGURE 2.

In the illustrated embodiment, the pump 18 is external and remote from all of the nodes 14. Remote may be a separation of one or more kilometers. In other embodiments the pump 18 may be internal and/or local to one of the nodes 18. In a particular metro embodiment, ring 12 may comprise a substantially circular ring system with a circumference of approximately 300 km. The external pump 18 may be placed substantially in the center and substantially equidistant from each node 14 to minimize loss of signal power in the leads 16. A pump may be substantially in the center when the difference in the length of leads 16 is less than 25%. The distance from the external pump 18 to one of the nodes 14 would, in this embodiment, be approximately 48 km. Assuming a power loss of 0.3 dB/km in the leads 16, the total power loss would be 48 km X 0.3 dB/km or 14.4 dB. In metro core or other ring networks with additional loading or size, two or more pumps 18 may be used, each substantially centrally located within a segment of the network. The number of pump source and the spacing of the pumps may be dependant on the ring size, loading, pump size, pump energy, line loss, and other suitable criteria.

FIGURE 2 is a block diagram illustrating details of a node 14 of FIGURE 1 in accordance with one embodiment of the present invention. In this embodiment, the nodes 14 use energy generated by the pump 18 to provide Raman amplification to ingress traffic from and egress traffic to ring 12.

Referring to FIGURE 2, the node 14 comprises a switch or other cross-connect 28, a demultiplexer 30, a multiplexer 32, and a transponder 36. Pump combiners 24 and 26 couple leads 16 of pump 18 to the fiber of the ring 12 for Raman amplification of signals in the ring. The pump combiners 24 may comprise dielectric multilayers or other means for inserting the amplifier signal into the ring 12 of the network 10 to induce Raman amplification of the traffic-carrying signal. The leads 16 may comprise a single-node fiber like "AllWave" fiber from Lucent or "PureBand" fiber from Sumitomo Electric Company, both of which have low loss at the wavelength band around 1400 nm, or other suitable means for conducting the amplifier signal.

In operation, ingress traffic from the rings 12 is received and amplified by Raman amplification using laser light from the pump 18 inserted at the pump combiner 24. In Raman amplification, laser light of about 100 nm shorter wavelength than the signal to be amplified is transmitted along the same optical fiber as the signal. The amplifier laser light may be propagated either in the same direction as the signal (co-pumping), or in the opposite direction as the signal (counter-pumping). In the illustrated embodiment, counter-pumping laser light is shown. As the amplification laser light scatters off the atoms of the fiber, the signal picks up photons and its strength is thus increased. Raman amplification does not require any doping of the optical fiber. Typically amplification occurs over a distance of 20km.

After amplification, demultiplexer 30 demultiplexes the signal into its component channels. Switch 28 is operable to add channels from transponder 36, drop channels to transponder 36, and/or transmit pass through channels to multiplexer 32. Transponder 36 is operable to transmit or receive data from client 38.

Multiplexer 32 multiplexes the signal with wave-division multiplexing. The multiplexed signal from multiplexer 32 is amplified at pump combiner 26 before being transmitted on ring 12 by Raman amplification through leads 16 from the pump 18.

FIGURE 3 is a block diagram illustrating details of the external pump of FIGURE 1 in accordance with one embodiment of the present invention. Referring to FIGURE 3, the external pump 18 comprises a combiner 40 connected via optical fiber connections 42 and 44 to laser sources 46 and 48, respectively. Combiner 40 is connected to the nodes 14 via the leads 16. Combiner 40 may comprise a dielectric multilayer device.

In operation, lasers 46 and 48 generate electromagnetic radiation or energy in the form of laser light. In one embodiment, combiner 40 polarizes the electromagnetic radiation from lasers 46 and 48, and the polarization of the two sources may be substantially at a 90° angle. The laser light is then carried in optical fiber leads 16 to the nodes 14 where it amplifies the optical signal as described above.

Pump 18 may comprise a fiber Raman laser, a semiconductor pump laser diode (LD), or other suitable source of laser light for Raman amplification. Additional lasers of differing wavelengths may be added to the pump 18 to increase the overall wattage of the pump.

The output of pump 18 may be expandable by adding pump sources with different wavelengths. In this way, the pump 18 allows in-service band upgradability or "pay as you grow" function. For a typical spectrum comprising 40 lambda between 1530 nm and 1565 nm it may be desirable to have 2 or more pumps to flatten the Raman gain between 1530 nm and 1565 nm.

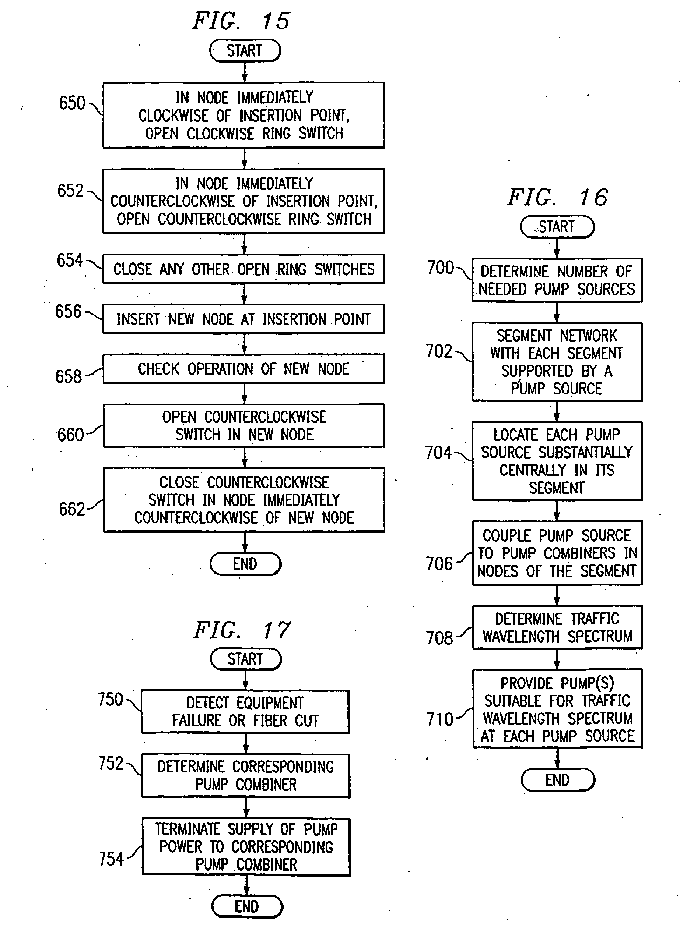

Switches 50 are operable to selectively terminate laser light to a particular node or nodes in response to an equipment failure of the node, node equipment repair or replacement, or other circumstances in which it may be desirable to terminate the laser light to a particular node or nodes. For example, a method for selectively terminating a supply of pump power to a node in response to a ring switch failure is described in reference to FIGURE 17, below.

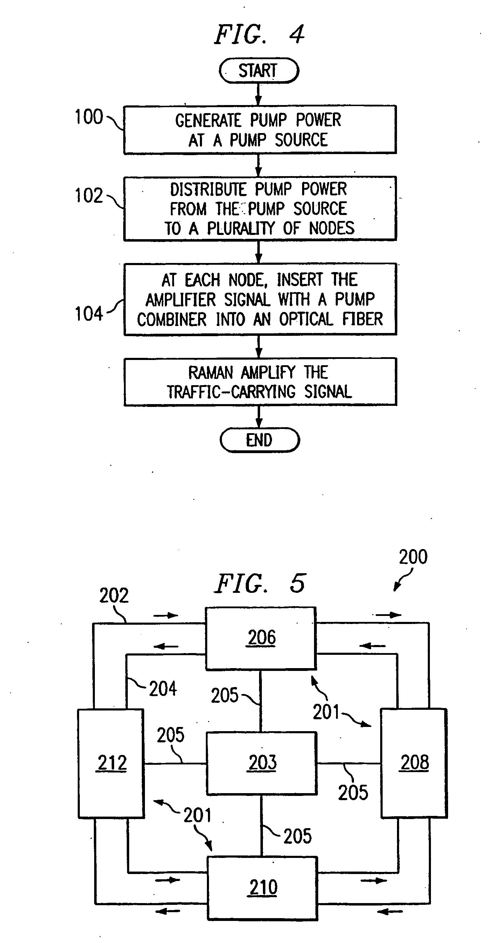

FIGURE 4 is a flow diagram illustrating a method of amplifying a signal of an optical network in accordance with one embodiment of the present invention. In this embodiment, the pump source is centralized.

Referring to FIGURE 4, the method begins with step 100 wherein pump power is generated at a centralized pump source of an optical network. The pump source 18 generates and/or provides at least one wavelength of pump light. At step 102, the signal is distributed from the pump source 18 to a plurality of nodes 14 in optical network 10. The signal may be conducted via optical fiber leads 16 or other suitable links. Leads 16 are preferably low-loss fibers.

Finally, at step 104, the pump power is fed into an optical fiber of the network with a pump combiner at each node to induce Raman amplification in the transmission fiber for a traffic-conveying optical signal of the network. In this way, the traffic-conveying signal of the network is efficiently amplified by a single, scalable source or limited set of centralized sources. As described above, the pump source may be located many kilometers from the node, and may also be located near the center of a ring network to take maximum advantage of the efficiency and scalability of the invention.

FIGURE 5 illustrates an optical network 200 in accordance with one embodiment of the present invention. In this embodiment, the optical network 200 is a flexible open ring network.

Referring to FIGURE 5, the network 200 includes a first fiber optic ring 202 and a second fiber optic ring 204 connecting a plurality of nodes 201, including nodes 206, 208, 210, and 212. Network 200 further comprises a pump 203 and optical fiber leads 205 connecting the pump 203 to the nodes 201. Pump 203 may comprise a pump 18 of FIGURES 1 and 3 or another suitable pump and, as described in reference to pump 18 of FIGURE 1, may be external and remote to the nodes 201 or internal or local to one of the nodes 201.

Network 200 is an optical network in which a number of optical channels are carried over a common path at disparate wavelengths. The network 200 may be a wavelength division multiplexing (WDM), dense wavelength division multiplexing (DWDM), or other suitable multi-channel network. The network 200 may be used in a short-haul metropolitan network, a long-haul inter-city network or any other suitable network or combination of networks.

In network 200, optical information signals are transmitted in different directions on the rings 202 and 204 to provide fault tolerance. The optical signals have at least one characteristic modulated to encode audio, video, textual, real-time, non-real-time, and/or other suitable data. Modulation may be based on phase shift keying (PSK), intensity modulation (IM) and other suitable methodologies.

In the illustrated embodiment, the first ring 202 is a clockwise ring in which traffic is transmitted in a clockwise direction. The second ring 204 is a counterclockwise ring in which traffic is transmitted in a counterclockwise direction. The nodes 201 are each operable to add and drop traffic to and from the rings 202 and 204. In particular, each node 201 receives traffic from local clients and adds that traffic to the rings 202 and 204. At the same time, each node 201 receives traffic from the rings 202 and 204 and drops traffic destined for the local clients. In adding and dropping traffic, the nodes 201 may multiplex data from clients for transmittal in the rings 202 and 204 and may demultiplex channels of data from the rings 202 and 204 for clients.

As previously described in connection with network 10, traffic may be added to the rings 202 and 204 by inserting the traffic channels or otherwise combining signals of the channels into a transport signal of which at least a portion is transmitted on a ring. Traffic may be dropped by making the traffic available for transmission to the local clients. Thus, traffic may be dropped and yet continue to circulate on a ring.

In a particular embodiment, traffic is passively added to and passively dropped from the rings 202 and 204. In this embodiment, channel spacing is flexible in the rings 202 and 204 and the node elements on the rings 202 and 204 need not be configured with channel spacing. Thus, channel spacing may be set by and/or at the add/drop receivers and senders of the nodes 201 coupled to the client. The transport elements of the nodes 201 communicate the received traffic on the rings 202 and 204 regardless of the channel spacing of the traffic.

Each ring 202 and 204 has a terminating point such that the rings 202 and 204 are "open" rings. The opening in the rings 202 and 204 may be a physical opening, an open, crossed, or other non-closed switch, a transmission device which has an opaque function or other obstruction operable to completely or effectively terminate, and thus avoid ring-interference in the rings 202 and 204. In this way, interference of each channel with itself due to recirculation is prevented or minimized such that the channels may be received and decoded within normal operating limits.

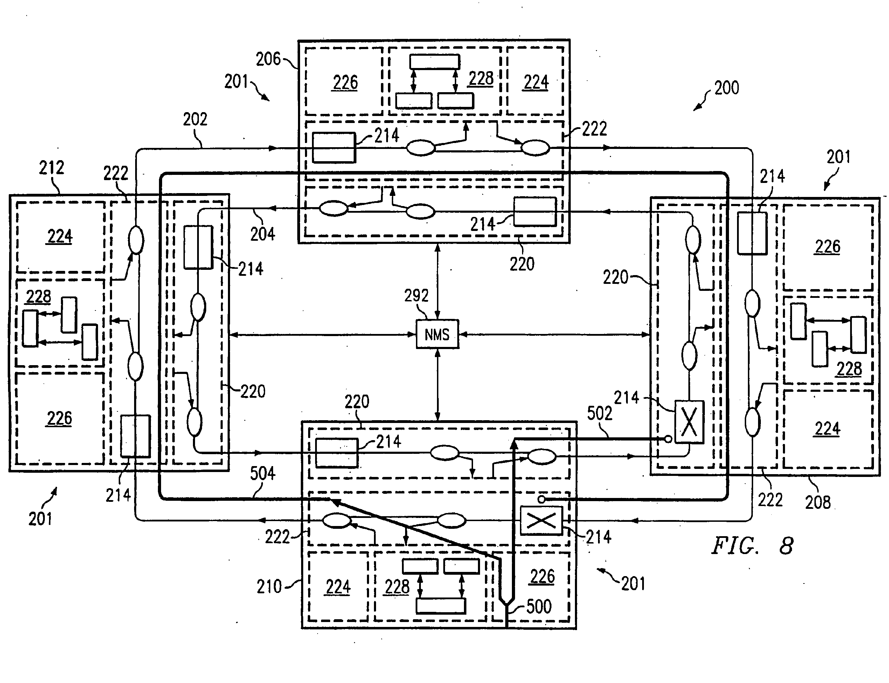

In one embodiment, the rings 202 and 204 are open and thus terminate in the nodes 201. In a particular embodiment, the rings 202 and 204 may terminate in neighboring nodes 201 at corresponding points along the rings 202 and 204. Terminal points in the rings 202 and 204 may be corresponding when, for example, they are between add and/or drop devices of two neighboring nodes or when similarly positioned within the same node. Further details regarding the open ring configuration is described below in reference to FIGURE 8.

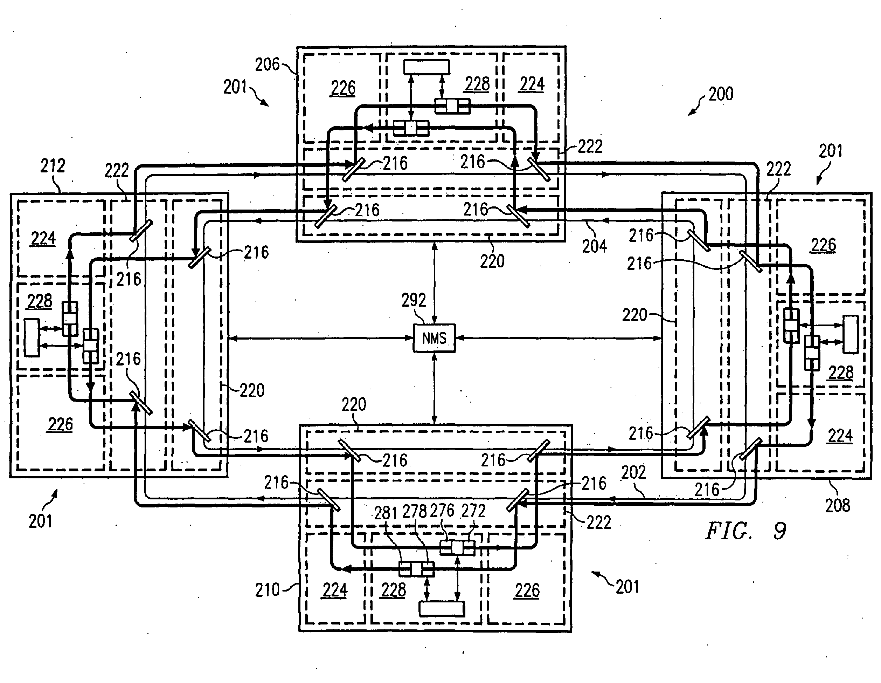

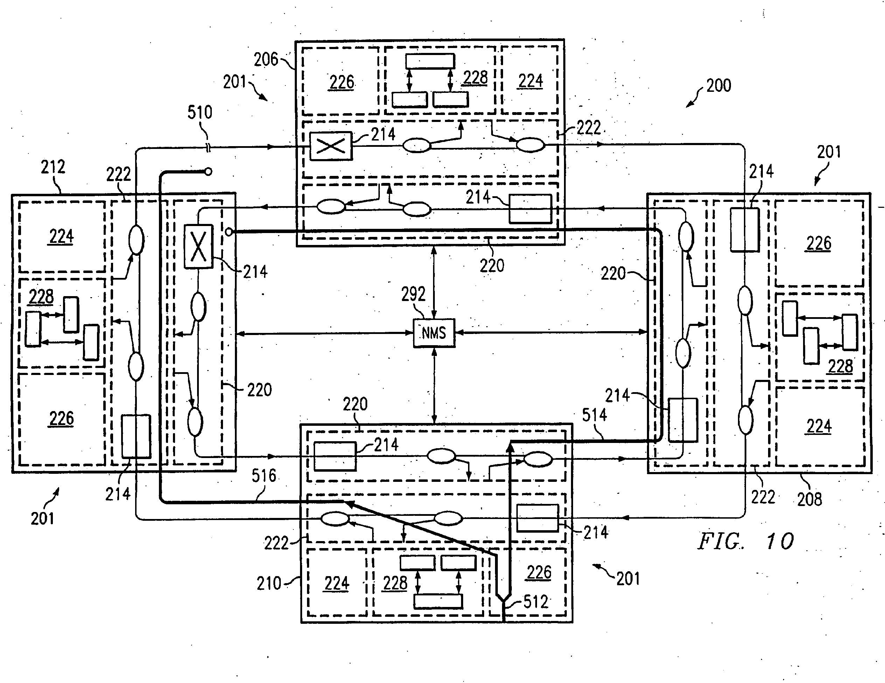

The nodes 201 may comprise active nodes, passive nodes, or a combination of active and passive nodes. Nodes may be passive in that they include no switches, switchable amplifiers, or other active devices. Nodes may be active in that they include optical switches, switchable amplifiers, or other active devices in the transport elements or otherwise in the node. Passive nodes may be of a simpler and less expensive design. In one embodiment, the network comprises a combination of active and passive nodes. In this way, active nodes may provide for protection switching functionality (described further below in reference to FIGURES 9 and 10) while the addition of passive nodes may allow for additional add/drop nodes in the network while minimizing the additional cost associated with the additional nodes.

While the network of FIGURE 5 provides maximum flexibility of channel spacing, bandwidth resources must be carefully conserved since, as described above and also in further detail below, bandwidths may not be terminated and thus not be "re-usable" between each node. In such a network, it may be particularly desirable to have the amplification in only the bandwidth that is necessary so as to reduce required pump power and pump wavelengths. The present invention provides in-service band upgradability or "pay as you grow" function and reliable passive mode amplification for a flexible channel spacing photonic network.

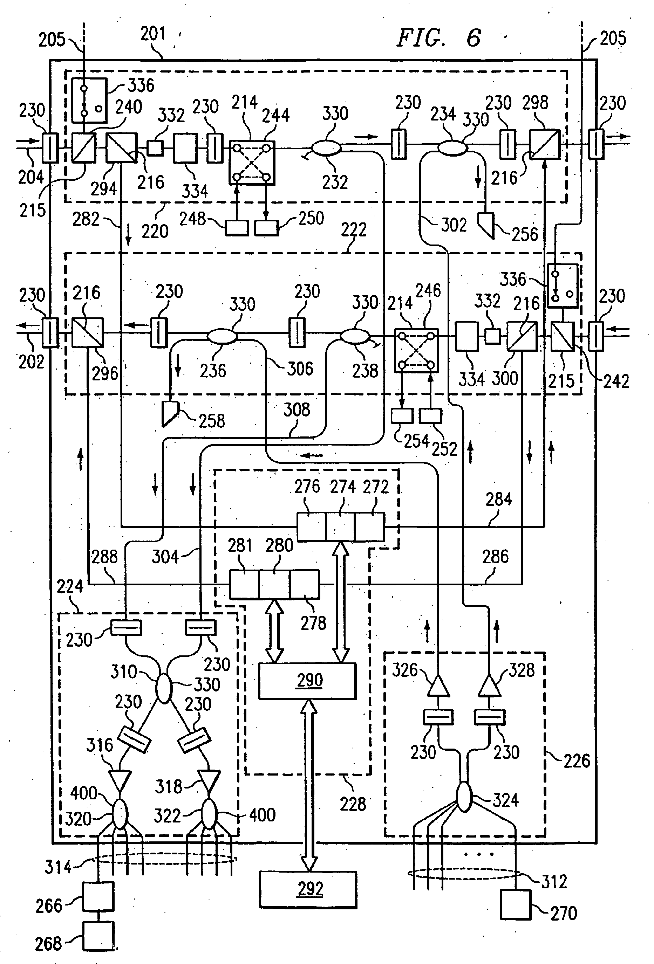

FIGURE 6 illustrates details of the node 201 in accordance with one embodiment of the present invention. In this embodiment, optical supervisory channel (OSC) traffic is transmitted in an external band separate from the revenue-generating traffic. In a particular embodiment, the OSC signal is transmitted at a wavelength of 1510 nanometers (nm).

Referring to FIGURE 6, the node 201 comprises counterclockwise transport element 220, clockwise transport element 222, distributing element 224, combining element 226, and managing element 228. In one embodiment, the elements 220, 222, 224, 226, and 228 as well as components within the elements may be interconnected with optical fiber links. In other embodiments, the components may be implemented in part or otherwise with planar waveguide circuits and/or free space optics. In addition, the elements of node 201 may each be implemented as one or more discrete cards within a card shelf of the node 201. Exemplary connectors 230 for a card shelf embodiment are illustrated by FIGURE 6. The connectors 230 may allow efficient and cost effective replacement of failed components. It will be understood that additional, different and/or other connectors may be provided as part of the node 201.

Transport elements 220 and 222 may each comprise passive couplers or other suitable optical splitters/couplers 330, ring switch 214, pump combiners 215, OSC filters 216, isolators 332, and variable optical attenuator (VOA) units 334. Ring switch 214 may be a 2x2 or other switch operable to selectively open the connected ring 202 or 204. In the 2x2 embodiment, the switch 214 includes a "cross" or open position and a "through" or closed position. The cross position may allow for loop back, localized and other signal testing. The open position allows the ring openings in the nodes 201 to be selectively reconfigured to provide protection switching.

Pump combiners 215 may comprise filters operable to receive at least one wavelength of pump light from pump 203 via leads 205 and to direct pump light into the rings 202 or 204 so as to amplify the signal carried by rings 202 or 204 through stimulated Raman effect. Switches 336 are operable to selectively terminate laser light to the node 201 in response to a fiber cut or other failure, interruption, or circumstances in which it may be desirable to terminate the laser light to a transport element of the node 201. The switches 336 may be instead of or in addition to the switches 50 of the pump 203 (as illustrated in reference to pump 18 of FIGURE 3). By locating the switches within the node 201, the node itself is able to turn off the pump power quickly when a fiber cut or other circumstance is detected.

In this embodiment, the switch 214 is disposed in the transport elements 220 and 222 between the ingress filter 216 and the splitter/couplers 330. Thus, the OSC signal may be recovered regardless of the position of switch 214. In another embodiment, OSC signals may be transmitted in-band with revenue-generating traffic by placing an OSC filter between the couplers 232 and 234 and between the couplers 236 and 238. OSC filters 216 may comprise thin film type, fiber grating or other suitable filters.

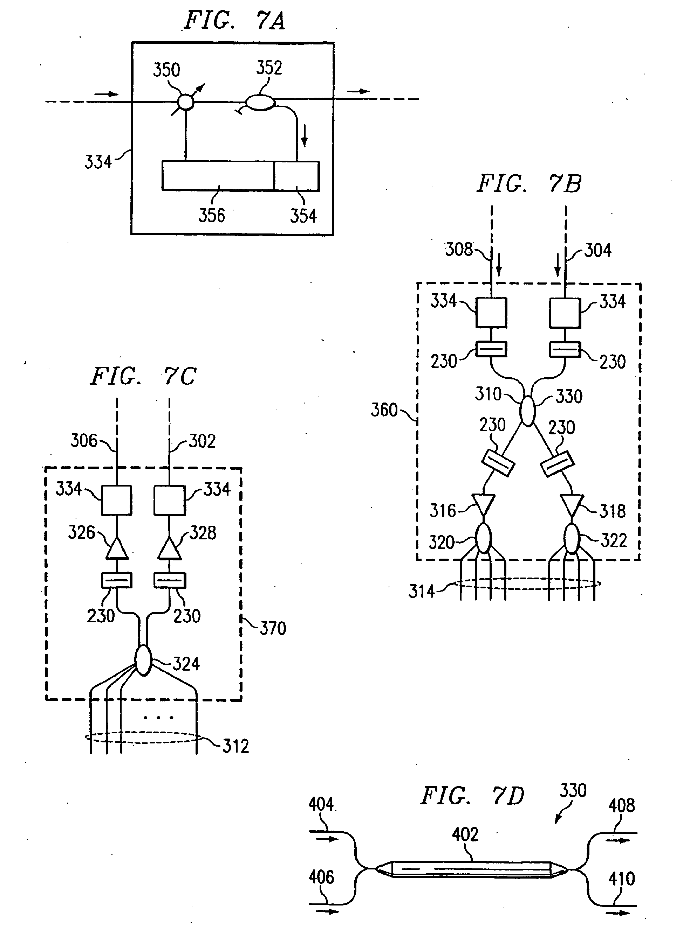

Isolators 332 prevent upstream feedback. VOA units 334 attenuate the ingress signal to a specified power level. Further details regarding the VOA units are described in conjunction with FIGURE 7A, below.

In the specific embodiment of FIGURE 6, counterclockwise transport segment 220 includes a passive optical splitter set having a counterclockwise drop coupler 232 and a counterclockwise add coupler 234. The counterclockwise transport element 220 further includes counterclockwise pump combiner 240 at the ingress edge of transport element 220, OSC filter 294, isolator 332 and VOA unit 334 just inside of pump combiner 240, OSC filter 298 at the egress edge, and counterclockwise ring switch 244 between the VOA unit 334 and drop coupler 232. Thus, the switch 244 in this embodiment is on the ingress side of the transport element and/or drop coupler.

Clockwise transport segment 222 includes a passive optical splitter set including clockwise add coupler 236 and clockwise drop coupler 238. Clockwise transport element 222 further includes clockwise pump combiner 242 at the ingress edge, OSC filter 300, isolator 332 and VOA unit 334 just inside clockwise pump combiner 242, OSC filter 296 at the egress edge of transport element 222, and clockwise ring switch 246 between the VOA unit 334 and drop coupler 238. Thus, the switch 246 in this embodiment is on the ingress side of the transport element and/or drop coupler.

Distributing element 224 may comprise a plurality of distributing amplifiers. In this embodiment, the distributing element 224 may comprise a distributing coupler 310 feeding into the distributing amplifiers which each include an amplifier and an optical splitter. For example, a first distributing amplifier may include amplifier 316 and optical splitter 320 while a second distributing amplifier may include amplifier 318 and splitter 322. The amplifiers 316 and 318 may comprise EDFAs, Raman Amplifiers, or other suitable amplifiers and may be pumped by either local or remote pump sources. Splitters 320 and 322 may comprise splitters with one optical fiber ingress lead and a plurality of optical fiber drop leads 314. The drop leads 314 may be connected to one or more filters 266 which in turn may be connected to one or more drop optical receivers 268.

Combining element 226 may be a combining amplifier and may comprise a splitter 324 with a plurality of optical fiber add leads 312 which may be connected to one or more add optical senders 270 associated with a client. Splitter 324 further comprises two optical fiber egress leads which feed into amplifiers 326 and 328. Amplifiers 326 and 328 may comprise EDFAs, Raman Amplifiers, or other suitable amplifiers and may be pumped by either local or remote pump sources.

Managing element 228 may comprise OSC senders 272 and 281, OSC interfaces 274 and 280, OSC receivers 276 and 278, and an element management system (EMS) 290. Each OSC sender, OSC interface and OSC receiver set forms an OSC unit for one of the rings 202 or 204 in the node 201. The OSC units receive and transmit OSC signals for the EMS 290. The EMS 290 may be communicably connected to a network management system (NMS) 292. NMS may reside within node 201, in a different node, or external to all of the nodes 201.

EMS 290 and/or NMS 292 may comprise logic encoded in media for performing network and/or node monitoring, failure detection, protection switching and loop back or localized testing functionality of the network 200. Logic may comprise software encoded in a disk or other computer-readable medium and/or instructions encoded in an application specific integrated circuit (ASIC), field programmable gate array (FPGA), or other processor or hardware. It will be understood that functionality of EMS 290 and/or NMS 292 may be performed by other components of the network 200 and/or be otherwise distributed or centralized. For example, operation of NMS 292 may be distributed to the EMS of nodes 201 and the NMS omitted. Similarly, the OSC units may communicate directly with NMS 292.

The node 201 further comprises counterclockwise add fiber segment 302, counterclockwise drop fiber segment 304, clockwise add fiber segment 306, clockwise drop fiber segment 308, OSC fiber segments 282, 284, 286, and 288, and optical spectrum analyzer (OSA) connectors 250, 254, 256, and 258. As previously described a plurality of passive physical contact connectors 230 may be included where appropriate so as to communicably connect the various elements of node 210.

In operation, the transport elements 220 and 222 are operable to passively add local traffic to the rings 202 and 204 and to passively drop at least local traffic from the rings 202 and 204. The transport elements 220 and 222 are further operable to passively add and drop the OSC signal to and from the rings 202 and 204.

More specifically, in the counterclockwise direction, the signal carried on ring 202 is Raman amplified using laser light from the pump 203 via counterclockwise pump combiner 240, as described above. OSC filter 294 receives the amplified signal, filters the OSC signal from the optical signal, and forwards the OSC signal to the OSC interface 274 via fiber segment 282 and OSC receiver 276. OSC filter 294 also forwards or lets pass the remaining transport optical signal to isolator 332, VOA unit 334, and switch 244. By placing the OSC filter 294 outside of the ring switch 244, the node 201 is able to recover the OSC signal regardless of the position of the ring switch 244. Ring switch 244 is selectively operable to transmit the optical signal to coupler 232 when the ring switch 244 is set to the through (closed) setting or to transmit the optical signal to OSA connector 250 when the ring switch 244 is set to the cross (open) setting. Further details regarding the OSA connectors are described below.

If ring switch 244 is set in the cross position, the optical signal is not transmitted to couplers 232 and 234, the ring 202 is open at the node 201, and dropping of traffic to the ring 202 does not occur at node 210. However, adding of traffic at node 201 occurs and the added traffic flows to the next node in the ring 202. If the ring switch 244 is set in the through position, the optical signal is forwarded to couplers 232 and 234 and adding and dropping of traffic to and from the ring 202 may occur at node 201.

Coupler 232 passively splits the signal from switch 244 into two generally identical signals. A passthrough signal is forwarded to coupler 234 while a drop signal is forwarded to distributing element 224 via segment 304. The signals may be substantially identical in content. Coupler 234 passively combines the passthrough signal from coupler 232 and an add signal comprising local add traffic from combining element 226 via fiber segment 302. The combined signal is passed to OSC filter 298.

OSC filter 298 adds an OSC signal from the OSC interface 274 via the OSC sender 272 and fiber segment 284 to the combined optical signal and forwards the combined signal as an egress transport signal to ring 204. The added OSC signal may be locally generated data or may be received OSC data passed through by the EMS 290.

In the clockwise direction, the signal carried on ring 202 is Raman amplified using laser light from the pump 203 via counterclockwise pump combiner 242, as described above. OSC filter 300 receives the amplified ingress optical signal, filters the OSC signal from the optical signal and forwards the OSC signal to the OSC processor 280 via fiber segment 286 and OSC receiver 278. OSC filter 300 also forwards the remaining transport optical signal to isolator 332, VOA unit 334, and switch 246. Ring switch 246 is selectively operable to transmit the optical signal to coupler 238 when the ring switch 246 is set to the through setting, or to transmit the optical signal to OSA connector 254 when the ring switch 246 is set to the cross setting.

If the ring switch 246 is set in the cross position, the optical signal is not transmitted to couplers 238 and 236, the ring 204 is open at the node 201, and dropping of traffic to the ring 204 does not occur at node 210. However, adding of traffic at node 201 occurs and the added traffic flows to the next node in the 201. If the ring switch 246 is set in the through position, the optical signal is forwarded to couplers 238 and 236 and adding and dropping of traffic to and from the ring 202 may occur at node 201.

Coupler 238 passively splits the signal from switch 246 into generally identical signals. A passthrough signal is forwarded to coupler 236 while a drop signal is forwarded to distributing unit 224 via segment 308. The signals may be substantially identical in content. Coupler 236 passively combines the passthrough signal from coupler 238 and an add signal comprising local add traffic from combining element 226 via fiber segment 306. The combined signal is passed to OSC filter 296.

OSC filter 296 adds an OSC signal from the OSC interface 280 via the OSC sender 281 and fiber segment 288 to the combined optical signal and forwards the combined signal as an egress transport signal to ring 202. As previously described, the OSC signal may be locally generated data or data passed through by EMS 290.

Prior to addition to the rings 202 and 204, locally-derived traffic is transmitted by a plurality of add optical senders 270 to combining element 226 of the node 201 where the signals are combined, amplified, and forwarded to the transport elements 220 and 222, as described above, via counterclockwise add segment 302 and clockwise add segment 306. The locally derived signals may be combined by the optical coupler 324, by a multiplexer or other suitable device.

Locally-destined traffic is dropped to distributing element 224 from counterclockwise drop segment 304 and clockwise drop segment 308. Distributing element 224 splits the drop signal comprising the locally-destined traffic into multiple generally identical signals and forwards each signal to an optical receiver 268 via a drop lead 314. The signal received by optical receivers 268 may first be filtered by filters 266. Filters 266 may be tunable filters or other suitable filters and receivers 268 may be broadband or other suitable receivers.

EMS 290 monitors and/or controls all elements in the node 201. In particular, EMS 290 receives an OSC signal in an electrical format via OSC filters 294, 296, 298 and 300, OSC receivers 276 and 278, OSC senders 272 and 281, and OSC interfaces 274 and 280. EMS 290 may process the signal, forward the signal and/or loop back the signal. Thus, for example, the EMS 290 is operable to receive the electrical signal and resend the OSC signal to the next node, adding, if appropriate, node-specific error information or other suitable information to the OSC. In this network, reverting is not required after repairing or replacing.

In one embodiment, each element in a node 201 monitors itself and generates an alarm signal to the EMS 290 when a failure or other problem occurs. For example, EMS 290 in node 201 may receive one or more of various kinds of alarms from the elements and components in the node 201: an optical receiver equipment alarm, optical sender equipment alarm, a distributing amplifier loss of light (LOL) alarm, a distributing amplifier equipment alarm, a combining amplifier LOL alarm, a combining amplifier equipment alarm, or other alarms. Some failures may produce multiple alarms.

In addition, the EMS 290 may monitor the wavelength and/or power of the optical signal within the node 210 via connections (not shown) between the OSA connectors 250, 254, 256, and 258 and an optical spectrum analyzer (OSA) communicably connected to EMS 290.

The NMS 292 collects error information from all of the nodes 201 and is operable to analyze the alarms and determine the type and/or location of a failure. Based on the failure type and/or location, the NMS 292 determines needed protection switching actions for the network 200. The protection switch actions may be carried out by NMS 292 by issuing instructions to the EMS in the nodes 201.

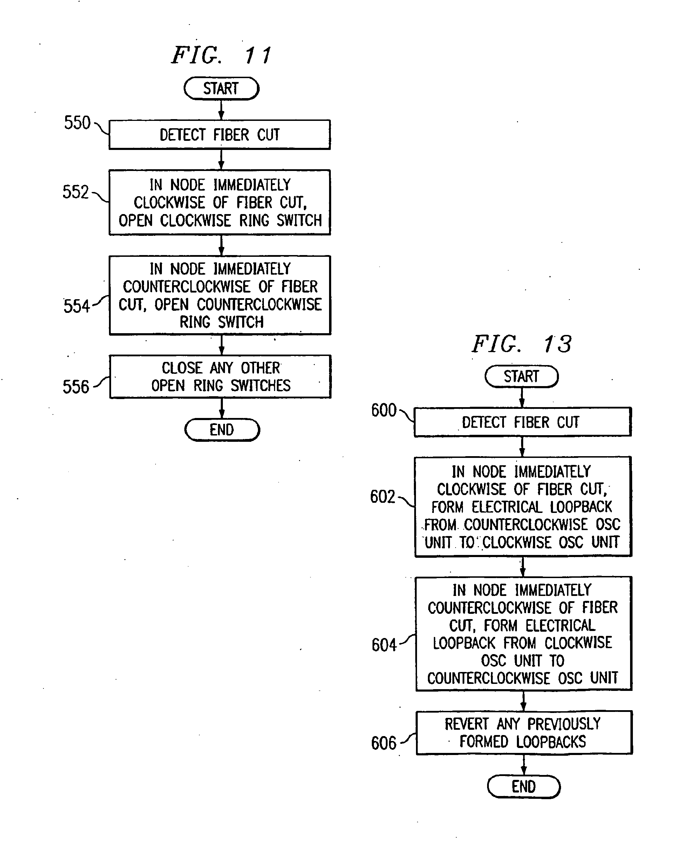

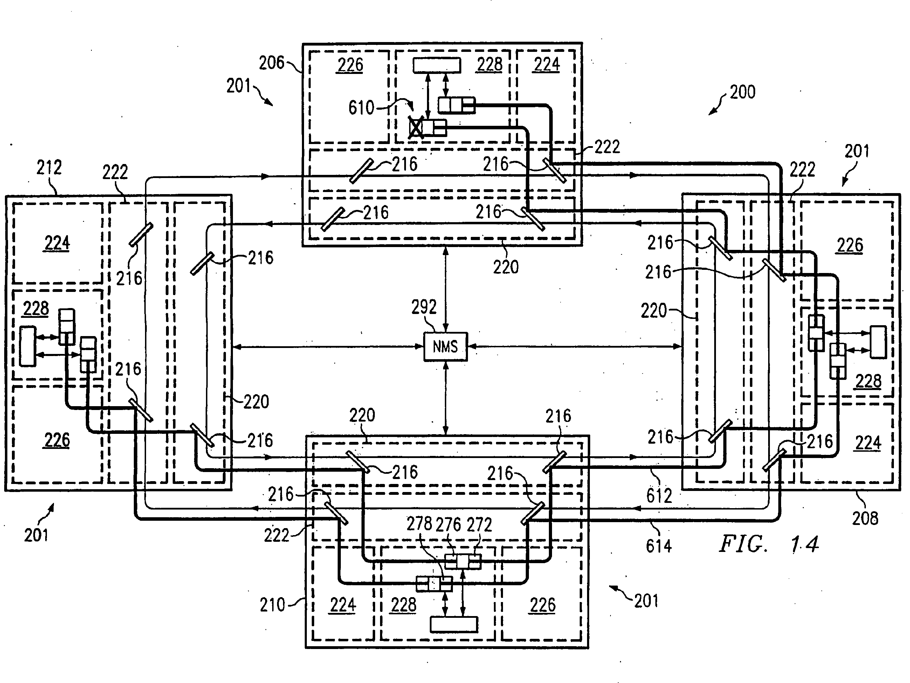

Error messages may indicate equipment failures that may be rectified by replacing the failed equipment. For example, a failure of one of the amplifiers in the distributing element may trigger a distributing amplifier alarm. The failed amplifier can then be replaced. A failed coupler in the distributing element may be likewise detected and replaced. Similarly, a failure of an optical receiver or sender may trigger an optical receiver equipment alarm or an optical sender equipment alarm, respectively, and the optical receiver or sender replaced as necessary. The optical sender should have a shutter or cold start mechanism. Upon replacement, no other switching or reversion from a switched state may be required. As described further below in reference to FIGURES 11 and 13, the NMS 292 may in response to certain messages or combinations of messages trigger a protection switching protocol.

In another embodiment of the present invention, redundant ring switches may be provided in the transport elements. The redundant ring switches may allow for continued circuit protection in the event of switch failure and failed ring switches may be replaced without interfering the node operations or configuration. Ring switch failure may comprise, among other things, failure of a ring switch to change from the cross position to a through position, failure of a ring switch to change from a through position to the cross position, or the switch becoming fixed in an intermediate position. The redundant ring switches may thus allow for protection switching in the event that a switch fails to switch from the closed position to the open position. Furthermore, the cascaded switch configuration allows a switch operation test, because whenever one of the switches has the cross position, the other switches' position does not affect the network traffic. Alternatively, redundancy in the event of a switch stuck in the closed position can be accomplished without a redundant switch by turning off the amplifier for that ring in the node with the failed switch, thus effectively terminating the signal at the amplifier.

In yet another embodiment, the distributing element may comprise array waveguide gratings (AWGs) operable to demultiplex the optical signal from coupler 310.

In yet another embodiment of the present invention, the combining element may further comprise switches operable to selectively transmit an optical signal to the clockwise ring, to the counterclockwise ring, or to both rings. In this embodiment, the switches may be configured so as to allow for the transmission of add traffic to both transport elements even in the event of a failure of one of the amplifiers 326 and 328.

FIGURES 7A - 7B are block diagrams illustrating particular units or elements of the node of FIGURE 6 in accordance with various embodiments of the present invention.

FIGURE 7A is a block diagram illustrating a variable optical attenuator (VOA) of the node of FIGURE 6 in accordance with one embodiment of the present invention.

Referring to FIGURE 7A, the VOA unit 334 includes a VOA 350, an optical splitter 352, a photodetector 354 and a controller 356. The VOA 350 attenuates the ingress signal to a specified power level based on a feedback loop including splitter 352 which taps the signal, photodetector 354 which detects the power level of the signal and the feedback controller 356 which controls VOA 350 based on the detected power level.

FIGURE 7B is a block diagram illustrating a distributing element 360 of the node 201 of FIGURE 6 in accordance with another embodiment of the present invention. Distributing element 360 may be used in node 201 as an alternative to distributing element 224.

Referring to FIGURE 7B, the distributing element 360 comprises elements as described above in reference to the distributing element 224 of FIGURE 6, including coupler 310, amplifiers 316 and 318, splitters 320 and 322, and fiber drop leads 314.

In addition, distributing element 360 comprises a VOA unit 334 on each of the ingress leads from optical fibers 304 and 308. The VOAs are operable to attenuate and equalize the signals from fibers 304 and 308 to a specified power level as described above in reference to FIGURE 7A.

FIGURE 7C is a block diagram illustrating a combining element 370 of the node in FIGURE 6 in accordance with another embodiment of the present invention. Combining element 370 may be used in node 201 as an alternative to combining element 226.

Referring to FIGURE 7C, the combining element 370 comprises elements as described above in reference to the combining element 226 of FIGURE 6, including amplifiers 326 and 328, splitter 324, and fiber add leads 312.

In addition, combining element 370 comprises a VOA unit 334 on each of the egress leads to optical fibers 302 and 306. The VOAs are operable to attenuate and equalize the signals to fibers 302 and 306 to a specified power level as described above in reference to FIGURE 7A.

FIGURE 7D illustrates details of an optical splitter/coupler 330 in accordance with one embodiment of the present invention. In the embodiment, the optical splitter/coupler 330 is a fiber coupler with two inputs and two outputs. The optical splitter/coupler 330 may in other embodiments be combined in whole or in part with a waveguide circuit and/or free space optics. It will be understood that the splitter/coupler 330 may include one or any number of any suitable inputs and outputs and that the splitter/coupler 330 may comprise a greater number of inputs than outputs or a greater number of outputs than inputs.

Referring to FIGURE 7D, the optical splitter/coupler 330 comprises a cover frame 402, first entry segment 404, second entry segment 406, first exit segment 408, and second exit segment 410.

First entry segment 404 and first exit segment 408 comprise a first continuous optical fiber. Second entry segment 406 and second exit segment 410 comprise a second continuous optical fiber. Outside of the cover frame 402, segments 404, 406, 408, and 410 may comprise a jacket, a cladding, and a core fiber. Inside the cover frame 402, the jacket and cladding may be removed and the core fibers twisted, coupled, or fused together to allow the transfer of optical signals and/or energy of the signals between and among the first and second continuous optical fibers. In this way, the optical splitter/coupler 330 passively combines optical signals arriving from entry segments 404 and 406 and passively splits and forwards the combined signal via exit segments 408 and 410. A plurality of signals may be combined and the combined signal split by combining and thereafter splitting the combined signal or by simultaneously combining and splitting the signals by transferring energy between fibers.

The optical splitter/coupler 330 provides flexible channel-spacing with no restrictions concerning channel-spacing in the main streamline. The splitter/coupler 330 may split the signal into two copies with substantially equal power. "Substantially equal" in this context means ±25%In a particular embodiment, the coupler has a directivity of over 55 dB. Wavelength dependence on the insertion loss is less than about 0.5 dB. The insertion loss for a 50/50 coupler is less than about 3.5 dB.

FIGURE 8 illustrates the optical network 200 with high level details of the nodes 206, 208, 210 and 212. As previously described, each node includes a counterclockwise transport element 220, a clockwise transport element 222, a distributing element 224, a combining element 226, and a managing element 228. The transport elements add and/or drop traffic to and from the rings 202 and 204. The combining element 226 combines ingress local traffic to generate an add signal that is provided to the transport elements 220 and 222 for transmission on the rings 202 and 204. The distributing element 224 receives a dropped signal and recovers local egress traffic for transmission to local clients. The managing element 228 monitors operation of the node 201 and/or network 200 and communicates with a NMS 292 for the network 200.

Referring to FIGURE 8, each node 206, 208, 210 and 212 includes a ring switch 214 in each transport element 220 and 222 that is controllable to selectively open or close the connected ring 202 or 204 prior to the dropping or adding of traffic by the transport element 220 or 222 in the node. The ring switches 214 may be otherwise suitably positioned within one or more or each node 201 prior to the dropping and/or adding of traffic at an inside or outside edge of the node 201 or between the node and a neighboring node 201.

During normal operation, a single ring switch 214 is crossed or otherwise open in each ring 202 and 204 while the remaining ring switches 214 are closed. Thus, each ring 202 and 204 is continuous or otherwise closed except at the ring switch 214 that is open. The ring switches 214 that are open in the rings 202 and 204 together form a switch set that effectively opens the rings 202 and 204 of the network 200 in a same span and/or corresponding point of the network 200. A same span is opened in the network 200 in that, for example, the nodes 201 neighboring the span do not receive ingress traffic from the span. Such alignment of the open ring switches 214 in, along or at the periphery of a span allows each node 201 to communicate with each other node 201 in the network 200 while avoiding or minimizing interference from circulating traffic.

In the illustrated embodiment, ring switch 214 in the clockwise transport element 222 of node 210 is crossed, as is ring switch 214, in the counterclockwise transport element 220 of node 208. The remaining ring switches 214 are closed to a through position. A traffic channel 500 added at node 210 travels around the rings 202 and 204 in exemplary light paths 502 and 504. In particular, a counterclockwise light path 502 extends from the combining element 226 of node 210 to the counterclockwise transport element 220 where it is added to counterclockwise ring 204. On counterclockwise ring 204, light path 502 extends to node 208 where it is terminated by the crossed ring switch 214 of the counterclockwise transport element 220. Clockwise light path 504 extends from the combining element 226 of node 210 to the clockwise transport element 222 of node 210 where it is added to clockwise ring 202. On clockwise ring 202, light path 504 extends to ring 212, through the clockwise transport element 222 of ring 212, to ring 206, through the clockwise transport element 222 of ring 206, to node 208, through the clockwise transport element 222 of node 208, and back to node 210 where it is terminated by the crossed ring switch 214 on the ingress side of the clockwise transport element 222. Thus, each node 206, 208, 210 and 212 is reached by each other node from a single direction and traffic is prevented from circulating around either ring 202 and 204 or otherwise causing interference.

FIGURE 9 illustrates the optical network 200 with high level details of the nodes 206, 208, 210 and 212. The nodes each include the counterclockwise and clockwise transport elements 220 and 222 as well as the combining element 224, distributing element 226, and managing element 228. In addition to adding and dropping traffic channels to and from the rings 202 and 204, the transport elements 220 and 222 add and drop the OSC to and from the rings 202 and 204 for processing by managing element 228.

Referring to FIGURE 9, as previously described, the transport elements 220 and 222 include an OSC filter 216 at an ingress point prior to the ring switches 214 to filter out and/or otherwise remove the OSC from the rings 202 and 204. In each node 201, the OSC signal from each ring 202 and 204 is passed to corresponding optical receiver 276 and 278 of the OSC unit for processing by EMS 290. In addition, the OSC signal generated by the EMS 290 for each ring 202 and 204 is transmitted by the optical sender 272 or 281 onto the corresponding ring 202 and 204 for transmission to the next node 201.

In normal operation, each node 201 receives an OSC signal from the neighboring nodes along the rings 202 and 204, processes the signal and passes the OSC signal on and/or adds its own OSC signal for transmission to the neighboring nodes.

Placement of the OSC filters 216 at the periphery of the transport elements 220 and 222 outside the ring switches 214 allows each node 201 to receive the OSC signal from its neighboring or adjacent nodes 201 regardless of the open/close status of its ring switches 214. If the OSC filters are inside the ring switches 214, for example in embodiments where the ring switches 214 are outside of the nodes 201, the OSC signals may be looped back between rings 202 and 204 at the edges of the open span. For example, for the illustrated embodiment, the EMS 290 of node 208 may pass received OSC information destined for node 210 from the clockwise OSC unit to the counterclockwise OSC unit for transmission to node 210 on the counterclockwise ring 204. Similarly, OSC information received at node 210 and destined for node 208 may be passed by the EMS 290 of node 210 from the counterclockwise OSC unit to the clockwise. OSC unit for transmission to node 208 on the clockwise ring 202.

FIGURE 10 illustrates protection switching and light path protection for network 200 in accordance with one embodiment of the present invention. As previously described, each node 206, 208, 210, and 212 includes clockwise and counterclockwise transport elements 220 and 222 as well as the combining, distributing and managing elements 224, 226, and 228. The managing elements each communicate with NMS 292.

Referring to FIGURE 10, a fiber cut 510 is shown in ring 204 between nodes 206 and 212. In response, as described in more detail below, the NMS 292 opens the ring switch 214 in counterclockwise transport element 220 of node 212 and the ring switch 214 in clockwise transport element 222 of node 206, thus effectively opening the span between nodes 206 and 212. After opening the rings 202 and 204 on each side of the break, the NMS 292 closes any previously open ring switches 214 in the nodes 201.

After protection switching, each node 201 continues to receive traffic from each other node 201 in network 200 and an operable open ring configuration is maintained. For example, a signal 512 originated in node 210 is transmitted on counterclockwise light path 514 to nodes 208 and 206 and transmitted on clockwise light path 516 to node 212. In one embodiment, the NMS 292, EMS 290 and the 2x2 ring switches 214 may be configured for fast protection switching with a switching time of less than 10 milliseconds.

FIGURE 11 is a flow diagram illustrating a method for protection switching of an open ring optical network in accordance with one embodiment of the present invention. In this embodiment, the optical network may be network 200 including a plurality of nodes each having a ring switch at or proximate to an ingress point of each connected ring. The method may be used in connection with other suitable network and node configurations.

Referring to FIGURE 11, the method begins at step 550 with the detection by the NMS 292 of a fiber cut of ring 202 or 204 of the network 200. The NMS 292 may detect and locate the fiber cut based on the OSC and/or other signals communicated by the node EMSs 290 to the NMS 292.

At step 552, the NMS 292 issues a command to the EMS 290 in the node 201 immediately clockwise of the cut to open the clockwise ring switch 246 in the clockwise transport element 222, thus opening the clockwise ring 202 at that node 201.

At step 554, the NMS 292 issues a command to the EMS 290 in the node 201 immediately counterclockwise of the cut to open the counterclockwise ring switch 244 in the counterclockwise transport element 220, thus opening the counterclockwise ring 204 at that node 201.

At step 556, any other ring switches 214 in the nodes 201 of the network 200 are closed. Thus, each ring 202 and 204 is essentially continuous with a single open point and/or segment. The open segment may be at a discrete switch and/or transmission element or may include part, all or even more than a span between nodes of the network 200. It will be understood that additional switches 214 in the rings 200 and/or 204 may remain open and transmission elements in the rings 202 and/or 204 may be turned off so long as, in one embodiment, each node 201 is able to communicate with each other node 201 through one of the rings 202 or 204.

An example of protection switching is illustrated by FIGURES 8 and 10. Referring back to FIGURE 8, for example, the clockwise and counterclockwise rings 202 and 204 of network 200 are open in the transport elements 222 and 220 of nodes 210 and 208, respectively. In response to at least a ring cut 510 as illustrated by FIGURE 10, protection switching crosses ring switch 214 and clockwise transport element 222 of node 206 and ring switch 214 of counterclockwise transport element 220 of node 212. Thus, in FIGURE 10 the clockwise and counterclockwise rings 202 and 204 are opened at nodes 206 and 212, respectively. The previously crossed ring switches in nodes 208 and 210 are closed to a through position to allow each node 201 to continue to receive traffic from each other node 201 in the network 200. The fiber cut 510 may be repaired at a convenient time after protection switching is completed. Furthermore, it should be noted that, after repair of the fiber cut 510, there is no need to revert the switches 214 and nodes 201 to their pre-cut states. For example, the network initially configured as shown in FIGURE 8 that is then configured as shown in FIGURE 10 due to fiber cut 510, may remain configured as shown in FIGURE 10 even after the cut 510 has been repaired. In this way, the steps shown in FIGURE 11 may be repeated for any number of fiber cut events.

As previously described, the ring switches 214 and the nodes 201 may be reconfigured to provide protection switching in response to other types of network failures that would otherwise prevent one node 201 from communicating local and/or other traffic to a neighboring node 201. For example, in response to a failure of a unit within clockwise transport segment 222 of node 206, the failed unit may be turned off (if appropriate) and the adjacent ring switch 246 actuated from a closed, or through position to an open, or cross position. As previously described, a crossed ring switch 214 terminates traffic on the connected ring 202 or 204 but may pass the traffic to the OSAs for monitoring by the EMS 290 and/or for loop back and other types of testing. Next, the ring switch 214 of the counterclockwise transport element 220 in node 212 may also be repositioned to the crossed position.

After the ring switches are crossed, the previously crossed ring switches 214 are closed to a through position to allow each node 201 to fully communicate with each other node 201. During continued operation, the failed unit may be replaced and proper operation of the new unit confirmed with loopback and/or localized testing as described in more detail below. After the failed unit is replaced and proper operation is confirmed, the network 200 may be left in the current configuration, reverted to the previous configuration or configured to yet another configuration to support localized and/or loopback testing within the network 200.

A failure of an amplifier in the combining element 226 may be detected by an equipment alarm for a combining amplifier. For example, in response to an equipment alarm for a combining amplifier in the combining element 226 of the clockwise transport element 222 of node 210, the ring switch 246 of clockwise transport element 222 in node 212 may be crossed and the ring switch 244 in the counterclockwise transport element 220 of node 210 may also be crossed. Previously opened ring switches 214 are at the same time closed and the failed combining amplifier unit in node 210 replaced and tested to confirm proper operation.

In one embodiment, a test signal may be inserted into the network and transmitted on the clockwise and/or counterclockwise rings. The signal may be terminated at a crossed ring switch 214 and transmitted via port 248 or 252 of FIGURE 6 to the OSA for analysis. By selectively closing the ring switches in the appropriate nodes, a selected light path may be tested with the OSA.

Likewise, in yet another embodiment, a localized area may be defined as necessary for light path or component testing, repair or replacement. To isolate the elements of the localized area from the rest of the in-service network, the clockwise ring switches 214 of a first node and the counterclockwise ring switch of a second node are opened. The localized area thus includes the opposite parts of two neighboring nodes such that, in one embodiment, a localized area may be defined covering any device of the node in the network. Thus, testing, replacement, and/or repair of components within the localized area may be conducted without interfering with the in-service network.

In certain circumstances, it may be desirable to test a light path originating from a combining element through the add coupler of a first node, transmitted around a ring through a plurality of nodes, and returning through the drop coupler of the first node to the distributing element of the first node. In this way, all the elements of each transport segments of a given ring direction of each node may be tested. Such a light path may be created by physically separating the optical fiber at a point between the add coupler and the drop coupler of a transport segment of the first node.

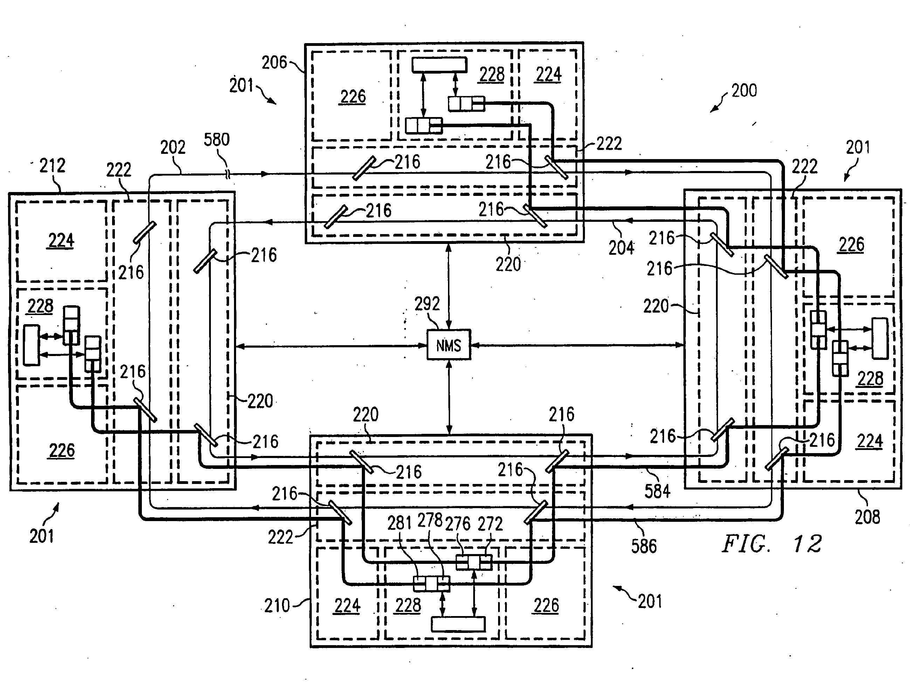

FIGURE 12 illustrates OSC protection for network 200 in response to a line cut in accordance with one embodiment of the present invention. In this embodiment, optical-electrical loopback in the managing elements 228 of the nodes 201 is used for protection of OSC.

Referring to FIGURE 12, a fiber cut or other line break 580 is shown in clockwise ring 202 between nodes 206 and 212. In response to the fiber cut 580, an optical electrical loopback 582 is established from the counterclockwise OSC system to the clockwise OSC system through EMS 290 in node 206 and from the clockwise OSC system to the counterclockwise OSC system through EMS 290 in node 212.

In a specific embodiment, the optical-electrical loopback in node 206 comprises receiving at the counterclockwise OSC unit of the managing element 228 of node 206 the OSC 584 from the counterclockwise ring 204 and processing the OSC at the EMS 290 as described above in reference to FIGURE 5. However, instead of transmitting the processed OSC as an egress signal on the counterclockwise ring 204 from node 206, the processed OSC is transmitted from the EMS 290 to the clockwise OSC unit and then onto clockwise ring 202, therefore looping the OSC back to node 206 from a counterclockwise to a clockwise signal.

Similarly, the optical-electrical loopback in node 212 comprises receiving at the clockwise OSC unit of the management element 228 of node 212 the OSC 586 from the clockwise ring 202 and processing the OSC at the EMS 290 as described above in reference to FIGURE 5. However, instead of transmitting the processed OSC as an egress signal on the clockwise ring 202 from node 212, the processed OSC is transmitted from the EMS 290 to the counterclockwise OSC unit and then to counterclockwise ring 204, therefore looping the OSC back to node 212 from a clockwise to a counterclockwise signal. In this way, each node 201 in the network 200 continues to receive the OSC from each other node 201 in the network 200. The optical-electrical loopback 582 may be used during normal or protection-switched operations and may be used when the OSC signal is transmitted in-band or in another embodiment which the OSC signal passes through the ring switches 214.

The OSC flow procedure is the same for both the normal and the protection-switching scenarios. For example, in FIGURE 9, if a ring switch 214 in the counterclockwise transport element 220 of the node 208 and a ring switch 214 in the clockwise element 222 have the cross positions shown in FIGURE 8, it may be wise to deploy the optical-electrical loopbacks from clockwise to counterclockwise in the node 208 and from counterclockwise to clockwise in node 220.

FIGURE 13 illustrates a method for OSC protection switching in an optical network in accordance with one embodiment of the present invention. In this embodiment, protection switching is implemented in response to a fiber cut. However, it will be understood that OSC protection switching may be implemented in response to other types of failures and may be implemented in conjunction with light path protection switching.

Referring to FIGURE 13, the method begins at step 600 with the detection by the NMS 292 of a fiber cut 580 in a span of a ring 202 or 204 of the optical network 200. The NMS 292 may detect the failure based on OSC and/or other signals from EMS 290 of the nodes 201.

At step 602, the NMS 292 issues a command to the EMS 290 in the node 201 immediately clockwise of the cut 580 to form an electrical loopback from the counterclockwise OSC unit to the clockwise OSC unit, thus creating, as described above, an optical-electrical loopback of the OSC from the counterclockwise ring 204 to the clockwise ring 202. Of course, the EMS 290 in the node 206 may detect the fiber cut 580 and execute this electrical loopback without the command from NMS 292.

At step 604, the NMS 292 issues a command to the EMS 290 in the node 201 immediately counterclockwise of the cut to form an electrical loopback from the clockwise OSC unit to the counterclockwise OSC unit, thus creating, as described above, an optical-electrical loopback of the OSC from the clockwise ring 202 to the counterclockwise ring 204. It will be understood that in this and other forms of protection switching, the NMS 292 may itself directly control devices in the nodes 201, may otherwise communicate with the devices to provide protection switching and/or the managing elements 228 of the nodes 201 may communicate among themselves to provide the functionality of the NMS 292.

At step 606, any other nodes 201 containing loopbacks that may have been previously formed are reverted to a non-loopbacked state. Or, if the OSC optical-electrical loopback procedure is deployed in nodes which have the ring switch in the cross-position, the reverting is not required. In this way, OSC data may continue to be transmitted by and received and processed at each node 201 in the network 200. After completion of the method, the fiber cut 580 may be repaired and tested. Also as above, after repair of the fiber cut 580, there is no need to revert the network 200 to its pre-switch state.

FIGURE 14 illustrates OSC protection switching in the network 200 in response to an OSC equipment failure in accordance with one embodiment of the present invention. In this embodiment, protection switching is implemented for failure of an OSC sender. Failure of an OSC filter 216 or an OSC receiver 276 or 278 may necessitate similar protection switching so that each node 201 may continue to be serviced by OSC data even in the event of an equipment failure.

Referring to FIGURE 14, counterclockwise OSC sender 281 of node 206 is detected as having failed. In a particular exemplary embodiment, a failure of an OSC optical sender 272 or 281 or an OSC optical receiver 276 or 278 may be detected by the NMS 292 or EMS 290 in the node 206 based on an LOL alarm for the optical receiver or a downstream optical receiver with or without another failure alarm. For example, an equipment alarm for the optical sender 281 in the counterclockwise OSC unit of the managing element 282 of node 206 would indicate a failure 610 of that optical sender. In response, the NMS 292 or EMS 290 in the node 206 may loopback counterclockwise OSC 612 to clockwise OSC at node 206. At node 212, the NMS 292 loopbacks the clockwise OSC 614 to the counterclockwise OSC. Any previous loopbacks in nodes 208 and/or 210 are broken and the information sent through the nodes.

After protection switching, the failed optical sender 281 may be replaced and thereafter tested using clockwise OSC. After confirming operation of the replaced optical sender 281, the network 200 may continue to operate in its present state or may revert to the initial OSC state. As previously discussed, for a fiber cut between nodes 206 and 210 the same procedure may be followed with the fiber cut repaired and tested.

FIGURE 15 illustrates a method for inserting a node 201 into the optical network 200 in accordance with one embodiment of the present invention. Node insertion may take full advantage of the scalability in the design of network 200. Other suitable elements may be similarly inserted between the existing nodes 201 of the optical network 200.

Referring to FIGURE 15, the method begins with step 650 wherein the clockwise ring switch 214 is opened in the node 201 immediately clockwise of the insertion point for the new node. Proceeding to step 652, the counterclockwise ring switch 214 is opened in the node 201 immediately counterclockwise of the insertion point. At step 654, any other open ring switches 214 are closed. Thus, the nodes 201 of the network 200 may each communicate with each other without communicating across a span in which the new node is to be added.

Proceeding to step 656, the new node is inserted at the insertion point. Such insertion may require the physical separation of the clockwise and counterclockwise optical ring fibers. At step 658, the operation of amplifiers, switches, and other elements of the new node may be checked and tested.

Proceeding to step 660, the counterclockwise switch 214 in the new node is opened. At step 662, the counterclockwise switch 214 is closed in the node 201 immediately counterclockwise of the new node. In this way, the counterclockwise ring 204 is open at the new node and the clockwise ring 202 is open at the node 201 immediately clockwise of the new node. In another embodiment, the clockwise switch 214 in the new node may be opened and the clockwise switch 214 in the node immediately clockwise of the new node may be closed.

FIGURE 16 is a flow diagram illustrating a method for provisioning pump sources for a Raman amplified open ring optical network in accordance with one embodiment of the present invention.

Referring to FIGURE 16, the method begins with step 700 wherein the number of pump sources needed to Raman amplify the open ring optical network is determined. This determination may be based upon the distance of each node in the network and the power required to amplify the traffic carrying signal on the network.

At step 702, the network is divided into segments so that each segment may be amplified by a pump source. The segments may comprise an equal number of nodes or a different number of nodes. Each segment may comprise a similarly sized geographic region or regions of different geographic size.

At step 704, each pump source is located substantially centrally within its segment. A pump may be substantially in the center when the difference in the length of leads 16 is less than 25%, or such that the pump source is substantially equidistant from each node to minimize the loss of signal power to the nodes.

Each node may comprise one or more pump combiners. At step 706, the pump source is coupled to the pump combiners in the nodes of the segment.

At step 708, the wavelength spectrum of the traffic carrying signal is determined. Finally, at step 710, pumps suitable to amplify the traffic wavelength spectrum are provided at each pump source. Pumps may be suitable to amplify the traffic wavelength spectrum when they are about 100 nm shorter in wavelength than the traffic signal. The pump source may be selected so as to reduce the required pump power and pump wavelengths.

FIGURE 17 is a flow diagram illustrating a method of selectively terminating a supply of pump power to a node in response to a ring switch failure. It will be understood that the method of FIGURE 17 may also be applied to different' equipment failures or to other failures such as line cuts occurring in an optical network in accordance with the present invention.

Referring to FIGURE 17 the method begins with step 750 wherein an equipment failure or fiber-cut is detected at a particular node of the network. For example, the fiber-cut may be detected through the loss of OSC signal. In a particular embodiment, each node may comprise a pump combiner coupling a centrally located pump source to a network ring. For example, a node may comprise a clockwise transport segment and a counterclockwise transport segment, each comprising a pump combiner. At step 752, the pump combiner corresponding to the failed ring switch is determined. In the exemplary embodiment, in the event of a failure of the ring switch in the clockwise transport segment, the corresponding pump combiner would be the pump combiner in the clockwise transport segment.

At step 754, the supply of pump power to the corresponding pump combiner is terminated. In the pump source embodiment described in reference to FIGURE 3, the termination may occur by activating the switch 50 of pump 18 corresponding to the node with the failed switch. Other suitable means for terminating the pump power to the node may be employed.

Although the present invention has been described with several embodiments, various changes and modifications may be suggested to one skilled in the art. It is intended that the present invention encompass such changes and modifications as fall within the scope of the appended claims.

## Claims

1. An optical network (10), comprising:
a plurality of nodes (14) connected by an optical fiber (12); **characterised by** the nodes each comprising a pump combiner (24, 26) coupled to the optical fiber and operable to insert pump power into the fiber to provide Raman amplification of a signal in a connected section of the optical fiber; and
a pump source (18) remote from the nodes and coupled to the pump combiners, the pump source operable to provide pump power to each of the pump combiners for Raman amplification.

2. The optical network of Claim 1, wherein the optical fiber comprises a ring connecting the nodes.

3. The optical network of Claim 2, wherein each node is operable to passively add and passively drop traffic from the ring.

4. The optical network of Claim 2, wherein the ring comprises an open ring, further comprising an optical switch operable to selectively close the ring for protection switching.

5. The optical network of Claim 2, wherein the ring comprises a first ring and further comprising a second ring operable to transport traffic in a direction opposite of the first ring, the first and second rings each comprising an open ring.

6. The optical network of Claim 2, wherein each node comprises at least one optical splitter to passively add and drop traffic from the ring.

7. The optical network of Claim 6, wherein the optical splitter comprises an optical coupler.

8. The optical network of Claim 1, wherein the network is a metro ring and all amplification signals on the ring are Raman amplified using a single pump source.

9. A method of amplifying a signal of an optical network, comprising:
generating pump light at a pump source;
conducting the pump light from the pump source to a plurality of remote nodes of the optical network; and
at each node, inserting the pump light with a pump combiner into an optical fiber of the network to induce Raman amplification.

10. The method of Claim 9, wherein the optical network is a ring network.

11. The method of Claim 9, wherein the pump source is centrally located.

12. The method of Claim 9, wherein at least two of the nodes are at least 10 km from the pump source.

13. An amplifying system (10) for amplifying a signal of an optical network, comprising:
a single means (18) for generating a pump light;
means (16) for conducting the pump light from the means for generating the pump light to a plurality of remote' nodes (14) of the optical network; and
at each node, means (24,26) for inserting the pump light into an optical fiber of the network to, induce Raman amplification.

14. The amplifying system of Claim 13, wherein the optical network is a ring network.

15. The amplifying system of Claim 13, wherein at least two of the nodes are at least 10 km from the means for generating the pump light.

## Patentansprüche

1. Optisches Netzwerk (10) mit:
einer Vielzahl von durch eine optische Faser (12) verbundenen Knoten (14)
**dadurch gekennzeichnet, dass**
jeder Knoten einen mit der optischen Faser gekoppelten Pumpkombinierer (24, 26) umfasst und der betriebsbereit ist, Pumpleistung in die Faser einzubringen, um Ramanverstärkung eines Signals in einem verbundenen Abschnitt der optischen Faser bereitzustellen; und
einer von den Knoten entferntgelegenen und mit den Pumpkombinierern gekoppelten Pumpquelle (18), wobei die Pumpquelle betriebsfähig ist, Pumpleistung an jede der Pumpkombinierer zur Ramanverstärkung bereitzustellen.

2. Optisches Netzwerk nach Anspruch 1, wobei die optische Faser einen Ring umfasst, der die Knoten verbindet.

3. Optisches Netzwerk nach Anspruch 2, wobei jeder Knoten betriebsfähig ist, Verkehr passiv hinzuzufügen und passiv von dem Ring fallen zu lassen.

4. Optisches Netzwerk nach Anspruch 2, wobei der Ring einen offenen Ring umfasst, weiter mit einem optischen Schalter, der betriebsfähig ist, den Ring zum Schutzschalten selektiv zu schließen.

5. Optisches Netzwerk nach Anspruch 2, wobei der Ring einen ersten Ring umfasst und weiter mit einem zweiten Ring, der betriebsfähig ist, Verkehr in einer Richtung entgegengesetzt zu dem ersten Ring zu transportieren, wobei der erste und der zweite Ring jeder einen offenen Ring umfassen.

6. Optisches Netzwerk nach Anspruch 2, wobei jeder Knoten zumindest einen optischen Splitter umfasst, um Verkehr passiv hinzuzufügen und von dem Ring fallen zu lassen.

7. Optisches Netzwerk nach Anspruch 6, wobei der optische Splitter einen optischen Koppler umfasst.

8. Optisches Netzwerk nach Anspruch 1, wobei das Netzwerk ein Metroring ist und alle Verstärkungssignale auf dem Ring durch Verwenden einer einzelnen Pumpquelle Ramanverstärkt werden.

9. Verfahren des Verstärkens eines Signals eines optischen Netzwerks, mit:
Erzeugen von Pumplicht an einer Pumpquelle;
Leiten des Pumplichtes von der Pumpquelle zu einer Vielzahl von entferntgelegenen Knoten des optischen Netzwerks; und
Einbringen des Pumplichtes mit einem Pumpkombinierer in eine optische Faser an jedem Knoten des Netzwerks, um Ramanverstärkung zu erzeugen.

10. Verfahren nach Anspruch 9, wobei das optische Netzwerk ein Ringnetzwerk ist.

11. Verfahren nach Anspruch 9, wobei die Pumpquelle zentral lokalisiert ist.

12. Verfahren nach Anspruch 9, wobei zumindest zwei der Knoten zumindest 10 km von der Pumpquelle sind.

13. Verstärkungssystem (10) zum Verstärken eines Signal eines optischen Netzwerks, mit:
Einer einzelnen Vorrichtung zum Erzeugen von Pumplicht (18) ;
einer Vorrichtung zum Einleiten des Pumplichtes (16) von der Vorrichtung zum Erzeugen des Pumplichtes in eine Vielzahl von entferntgelegenen Knoten (14) des optischen Netzwerks; und
Vorrichtungen zum Einbringen des Pumplichtes (24, 26) an jedem Knoten in eine optische Faser des Netzwerks, um Raman-Verstärkung zu erzeugen.

14. Verstärkungssystem nach Anspruch 13, wobei das optische Netzwerk ein Ringnetzwerk ist.

15. Verstärkungssystem nach Anspruch 13, wobei zumindest zwei der Knoten zumindest 10 km von der Vorrichtung zum Erzeugen des Pumplichtes sind.

## Revendications

1. Réseau optique (10) comprenant :
une pluralité de noeuds (14) connectés par une fibre optique (12) ;
**caractérisé en ce que** les noeuds comprennent chacun un mélangeur de pompage (24, 26) couplé à la fibre optique et pouvant être mis en oeuvre pour insérer une puissance de pompage dans la fibre pour fournir une amplification Raman d'un signal dans une section connectée de la fibre optique ; et
une source de pompage (18) distante des noeuds et couplée aux mélangeurs de pompage, la source de pompage pouvant être mise en oeuvre pour fournir une puissance de pompage à chacun des mélangeurs de pompage pour l'amplification Raman.

2. Réseau optique selon la revendication 1, dans lequel la fibre optique comprend un anneau reliant les noeuds.

3. Réseau optique selon la revendication 2, dans lequel chaque noeud peut être mis en oeuvre pour ajouter de manière passive et abandonner de manière passive du trafic à partir de l'anneau.

4. Réseau optique selon la revendication 2, dans lequel l'anneau comprend un anneau ouvert, comprenant en outre un commutateur optique pouvant être mis en oeuvre pour fermer sélectivement l'anneau pour la commutation de protection.

5. Réseau optique selon la revendication 2, dans lequel l'anneau comprend un premier anneau et comprenant en outre un second anneau pouvant être mis en oeuvre pour transporter le trafic dans une direction opposée au premier anneau, les premier et second anneaux comprenant chacun un anneau ouvert.

6. Réseau optique selon la revendication 2, dans lequel chaque noeud comprend au moins un séparateur optique pour ajouter et abandonner de manière passive du trafic à partir de l'anneau.

7. Réseau optique selon la revendication 6, dans lequel le séparateur optique comprend un coupleur optique.

8. Réseau optique selon la revendication 1, dans lequel le réseau est un anneau Métro et tous les signaux d'amplification sur l'anneau subissent une amplification Raman en utilisant une seule source de pompage.

9. Procédé d'amplification d'un signal d'un réseau optique, comprenant les étapes consistant à :
produire une lumière de pompage au niveau d'une source de pompage ;
conduire la lumière de pompage depuis la source de pompage vers une pluralité de noeuds distants du réseau optique ; et
au niveau de chaque noeud, insérer la lumière de pompage avec un mélangeur de pompage dans une fibre optique du réseau pour induire une amplification Raman.

10. Procédé selon la revendication 9, dans lequel le réseau optique est un réseau en anneau.

11. Procédé selon la revendication 9, dans lequel la source de pompage est située au centralement.

12. Procédé selon la revendication 9, dans lequel au moins deux des noeuds sont au moins à 10 km de la source de pompage.

13. Système d'amplification (10) pour amplifier un signal d'un réseau optique, comprenant :
un seul moyen (18) pour générer une lumière de pompage ;
un moyen (16) pour conduire la lumière de pompage depuis le moyen pour générer la lumière de pompage vers une pluralité de noeuds distants (14) du réseau optique ; et
au niveau de chaque noeud, un moyen (24, 26) pour insérer la lumière de pompage dans une fibre optique du réseau pour induire une amplification Raman.

14. Système d'amplification selon la revendication 13, dans lequel le réseau optique est un réseau en anneau.

15. Système d'amplification selon la revendication 13, dans lequel au moins deux des noeuds sont au moins à 10 km du moyen pour générer la lumière de pompage.
